(19) Europäisches Patentamt
European Patent Office
Office européen des brevets

(11) **EP 4 386 943 A1**

(12) **EUROPEAN PATENT APPLICATION**
published in accordance with Art. 153(4) EPC

(43) Date of publication:
**19.06.2024 Bulletin 2024/25**

(21) Application number: **22909657.3**

(22) Date of filing: **25.11.2022**

(51) International Patent Classification (IPC):
*H01M 50/10* (2021.01)     *H01M 50/147* (2021.01)

(52) Cooperative Patent Classification (CPC):
**H01M 50/10; H01M 50/147; H01M 50/15;
H01M 50/627; H01M 50/645;** Y02E 60/10

(86) International application number:
**PCT/CN2022/134302**

(87) International publication number:
**WO 2023/116342 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.12.2021 CN 202123300108 U**

(71) Applicant: **Huawei Digital Power Technologies
Co., Ltd.
Shenzhen, Guangdong 518043 (CN)**

(72) Inventors:
• HUANG, Da
  **Shenzhen, Guangdong 518043 (CN)**
• JIANG, Xi
  **Shenzhen, Guangdong 518043 (CN)**

(74) Representative: **Maiwald GmbH
Engineering
Elisenhof
Elisenstrasse 3
80335 München (DE)**

(54) **BATTERY COVER PLATE AND BATTERY**

(57)     This application provides a battery cover and a battery. The battery cover includes a cover body and a first sealing structure. The cover body is provided with an electrolyte filling port that runs through the cover body, and an electrolyte is injected into the battery through the electrolyte filling port. The first sealing structure includes a sealing nail and a bone nail. The sealing nail is sleeved on at least a part of the bone nail, the sealing nail and the bone nail are inserted into the electrolyte filling port, and the sealing nail and the electrolyte filling port form a first sealing layer through interference fitting, to seal the electrolyte filling port. An outer peripheral wall of the bone nail is provided with a convex part, and a part of the sealing nail is located between the convex part and an inner wall of the electrolyte filling port in a radial direction of the electrolyte filling port. Disposing the convex part can enhance connection stability between the sealing nail and the bone nail, increase a local compression amount of the sealing nail, improve sealing effect, and ensure normal operation of the battery.

FIG. 4

# Description

This application claims priority to Chinese Patent Application No. 202123300108.7, filed with the China National Intellectual Property Administration on December 25, 2021 and entitled "BATTERY COVER AND BATTERY", which is incorporated herein by reference in its entirety.

## TECHNICAL FIELD

This application relates to the field of mechanical technologies, and in particular, to a battery cover and a battery.

## BACKGROUND

A battery cover is one of the important components of a battery. An electrolyte filling port is disposed on the battery cover, and is used to inject an electrolyte into the battery or supplement an electrolyte. To prevent electrolyte leakage from occurring in the electrolyte filling port subsequently, the electrolyte filling port needs to be sealed, and a sealing nail is inserted into the electrolyte filling port and performs interference fitting with an inner wall of the electrolyte filling port to perform sealing. In this sealing manner, the sealing nail has a risk of being detached from the electrolyte filling port in a use process, thereby causing electrolyte leakage.

## SUMMARY

This application provides a battery cover and a battery. Disposing a convex part can enhance connection stability between a sealing nail and a bone nail, increase a local compression amount of the sealing nail, enhance sealing effect, and ensure normal operation of the battery.

According to a first aspect, an implementation of this application provides a battery cover, where the battery cover is applied to a battery, and the battery cover includes a cover body and a first sealing structure. The cover body is provided with an electrolyte filling port that runs through the cover body, and an electrolyte is injected into the battery through the electrolyte filling port. The first sealing structure includes a sealing nail and a bone nail. The sealing nail is sleeved on at least a part of the bone nail, the sealing nail and the bone nail are inserted into the electrolyte filling port, and the sealing nail and the electrolyte filling port form a first sealing layer through interference fitting, to seal the electrolyte filling port. An outer peripheral wall of the bone nail is provided with a convex part, and a part of the sealing nail is located between the convex part and an inner wall of the electrolyte filling port in a radial direction of the electrolyte filling port.

The cover body includes an outer surface and an inner surface, and the inner surface is disposed close to the electrolyte compared with the outer surface. The electrolyte filling port runs through the outer surface and the inner surface of the cover body, an axial direction of the electrolyte filling port is perpendicular to the outer surface and the inner surface of the cover body, and the radial direction of the electrolyte filling port is parallel to the outer surface and the inner surface. The convex part is located on the outer peripheral wall of the bone nail and protrudes towards the electrolyte filling port along the radial direction, the sealing nail is sleeved on the convex part and a part of the bone nail, and a projection of the convex part on the electrolyte filling port along the radial direction is located on the inner wall of the electrolyte filling port.

Disposing the convex part prevents the sealing nail from loosening in an axial direction and enhances the connection stability between the sealing nail and the bone nail, so that the bone nail does not fall off easily from the sealing nail, thereby better playing a sealing function. In addition, disposing the convex part increases the local compression amount of the sealing nail, so that sealing effect of the first sealing layer is enhanced. The first sealing structure plays a good sealing function on the electrolyte filling port, and the electrolyte is not easily leaked to the outside of the battery through the electrolyte filling port, thereby effectively improving reliability of long-term sealing of the battery and ensuring normal operation of the battery.

In an implementation, a plurality of convex parts are disposed at intervals around a periphery of the bone nail.

In an implementation, the convex part is disposed around the outer peripheral wall of the bone nail.

In an implementation, the bone nail is provided with a plurality of convex parts along the axial direction, to prevent the bone nail and the sealing nail from loosening in the axial direction, and ensure stable combination of the bone nail and the sealing nail.

The sealing nail is elastic and can be compressed. Before the sealing nail is inserted into the electrolyte filling port, an outer diameter of the sealing nail along the radial direction is greater than an inner diameter of the electrolyte filling port. After the sealing nail is inserted into the electrolyte filling port, the sealing nail is compressed, and the sealing nail is closely attached to the inner wall of the electrolyte filling port, to form the first sealing layer.

In an implementation, a material of the sealing nail is rubber.

In an implementation, hardness of the bone nail is greater than hardness of the sealing nail, and the bone nail is not easily compressed.

In an implementation, after the first sealing structure is inserted into the electrolyte filling port, a compression degree of the bone nail is less than a compression degree of the sealing nail.

In an implementation, after the first sealing structure is inserted into the electrolyte filling port, the bone nail is not compressed.

In an implementation, a material of the bone nail is plastic, metal, or ceramic.

In a possible implementation, in the radial direction of the electrolyte filling port, a compression amount of the part of the sealing nail between the convex part and the inner wall of the electrolyte filling port is a first compression amount, a compression amount of a part of the sealing nail between a part that is of the bone nail and that is other than a part provided with the convex part and the inner wall of the electrolyte filling port is a second compression amount, and the first compression amount is greater than the second compression amount.

The compression amount refers to a ratio of a thickness of the sealing nail compressed along the radial direction to an original thickness. Before the sealing nail is compressed, along the radial direction, a thickness of a part that is of the sealing nail and that is in contact with the convex part is a first thickness, and a thickness of a part that is of the sealing nail and that is in contact with a part of the bone nail other than the convex part is a second thickness. Because the convex part is disposed, the first thickness is less than the second thickness. After the sealing nail is compressed, along the radial direction, because the first thickness is less than the second thickness, the first compression amount is greater than the second compression amount. In the radial direction, a local compression amount of the part of the sealing nail between the convex part and the inner wall of the electrolyte filling port increases, and the sealing nail is more closely in contact with the inner wall of the electrolyte filling port, thereby enhancing sealing effect of the sealing nail on the electrolyte filling port.

Disposing the convex part increases the local compression amount of the sealing nail, so that the sealing effect of the first sealing layer is enhanced. The first sealing structure plays a good sealing function on the electrolyte filling port, thereby effectively improving the reliability of long-term sealing of the battery and ensuring the normal operation of the battery.

In an implementation, the first compression amount is 15%.

In an implementation, the first compression amount is greater than 15%.

In an implementation, the second compression amount is greater than or equal to 8% and less than 10%.

In an implementation, the second compression amount is greater than or equal to 10% and less than 15%.

In a possible implementation, the convex part and the bone nail are of an integrated structure. The integrated structure has higher strength, and the convex part and the bone nail are not easily separated.

In an implementation, the convex part is fastened to the bone nail by welding.

In a possible implementation, the electrolyte filling port includes a first port and a second port that are connected, the first port is disposed close to an outer surface of the battery cover compared with the second port, and a minimum inner diameter of the first port is greater than or equal to an inner diameter of the second port. The bone nail includes a nail rod and a nail head that are connected, the nail head is clamped to an inner wall of the first port, the nail rod is located in the second port, the sealing nail is sleeved at an end that is of the nail rod and that is away from the nail head. The convex part is located between the nail rod and the inner wall of the electrolyte filling port in the radial direction of the electrolyte filling port. In the radial direction, a diameter of the nail head is greater than a diameter of the nail rod and an inner diameter of the second port, so that the nail head is clamped to the inner wall of the first port. In an implementation, the nail head and the inner wall of the first port are welded and fastened. The nail head and the first port are disposed, so that the nail head is clamped to the inner wall of the first port, and movement of the bone nail along the axial direction towards inside of the battery is limited, to prevent the bone nail from falling into the inside of the battery, and ensure the sealing function of the first sealing structure on the electrolyte filling port and the normal operation of the battery.

In a possible implementation, the first port is a tapered port, the second port is a columnar port, and inner diameters of the first port and the second port are equal at a joint. In the axial direction, from an end close to the inside of the battery to an end away from the inside of the battery, an inner diameter of the first port gradually increases, and an outer diameter of the nail head matches the inner diameter of the first port, so that the nail head is better clamped to the first port.

In a possible implementation, a gap is provided between the sealing nail and the nail head. The gap is disposed, so that space is reserved for the sealing nail at an end that is away from the inside of the battery along the axial direction to deform. The bone nail does not shift due to deformation of the sealing nail, the connection stability between the sealing nail and the bone nail is enhanced, and the bone nail does not fall off easily from the sealing nail. In addition, the sealing nail may be prevented from squeezing the nail head upward because the sealing nail is compressed in the electrolyte filling port, thereby affecting structural strength of the nail head and the nail rod.

In an implementation, the nail rod is wrapped by the sealing nail, and the gap is formed by reducing a thickness that is along the radial direction and that is of an end of the sealing nail close to the nail head.

In an implementation, the sealing nail is sleeved on a part of the nail rod, and an end of the nail rod that is close to the nail head is not wrapped by the sealing nail. In this case, a large gap may be formed, and larger deformation space is reserved for the sealing nail, thereby enhancing the connection stability between the sealing nail and the bone nail.

In a possible implementation, the sealing nail and the bone nail are of an integrated structure, to enhance connection strength between the sealing nail and the bone nail.

In an implementation, the bone nail may be formed in advance, and then the bone nail is placed in a mold for injection molding the sealing nail, and a melt material of the bone nail and the sealing nail is integrally injected and molded, to solidify and form the first sealing structure of the integrated structure.

In a possible implementation, the battery cover further includes a second sealing structure. The second sealing structure is located at an end that is of the bone nail and that is away from the electrolyte. The second sealing structure covers the electrolyte filling port, and an edge of the second sealing structure is welded to an outer surface of the cover body to form a second sealing layer, to seal the electrolyte filling port. An orthographic projection area of the second sealing structure on the cover body is greater than an opening area of the electrolyte filling port on the outer surface of the cover body. The orthographic projection of the second sealing structure on the cover body covers the electrolyte filling port, and the edge of the second sealing structure is welded to a periphery of the electrolyte filling port on one side of the outer surface of the cover body, to form the second sealing layer, thereby improving sealing performance of the electrolyte filling port. The first sealing structure and the second sealing structure perform double-layer sealing on the electrolyte filling port to improve sealing performance.

In a possible implementation, the second sealing structure includes a boss and a welding part disposed around the boss. The welding part is welded to the outer surface of the cover body to form the second sealing layer. The boss protrudes from the outer surface of the cover body and is located on an outer side of the bone nail. The boss, the welding part, the outer surface of the cover body, and the bone nail form an enclosed space. The boss protrudes along the axial direction away from the cover body, and the welding part is welded to the outer surface of the cover body at a periphery of the electrolyte filling port. The boss covers at least a part of the electrolyte filling port. In an implementation, the boss covers the entire electrolyte filling port. In an implementation, the boss and the welding part are of an integrated structure.

The enclosed space is disposed. When the sealing performance of the electrolyte filling port is detected by using a helium detection method, a helium storage space is provided. When sealing performance of the second sealing layer is poor, helium gas may enter the enclosed space for storage in a process of inrushing the helium gas. When a helium gas detector detects the helium gas, the helium gas in the enclosed space escapes and is detected by the helium gas detector. The boss protrudes outward from the outer surface of the cover body, so that a volume of the enclosed space is large. The enclosed space with a large volume increases an amount of helium gas that enters the enclosed space when the sealing performance of the second sealing layer is poor, thereby effectively improving identification of helium detection and improving reliability of the helium detection.

The boss is disposed, so that a buffer is formed at a joint between the boss and the welding part. In this way, welding stress can be effectively alleviated, a welding yield rate can be improved, and sealing performance of the second sealing layer for the electrolyte filling port can be ensured. In addition, the boss may increase the volume of the enclosed space, effectively improve the identification of the helium detection, and improve reliability of a result of sealing performance detection of the electrolyte filling port.

In a possible implementation, the outer surface of the cover body is provided with a concave part, the concave part is disposed around a periphery of the electrolyte filling port, and the edge of the second sealing structure is welded to the concave part. The concave part is concave from the outer surface of the cover body to the inner surface.

In an implementation, the welding part and the outer surface of the cover body are welded to the concave part. In an implementation, the welding part is welded to an inner wall of a side that is of the concave part and that is away from the electrolyte filling port. The inner wall of the concave part that is close to a side of the electrolyte filling port, the boss, the welding part, the outer surface of the cover body, and the nail head jointly form the enclosed space. In an implementation, the concave part is connected to the electrolyte filling port, the electrolyte filling port is a columnar port, and the nail head is clamped to the concave part. The concave part is disposed, so that the second sealing structure is better welded to the outer surface of the cover body, and the sealing performance of the second sealing structure for the electrolyte filling port is ensured.

In an implementation, the outer surface of the cover body is not provided with the concave part, and the welding part is directly welded to the outer surface of the cover body.

In a possible implementation, a thickness of a side that is of the welding part and that is close to the boss is less than a thickness of a side that is of the welding part and that is away from the boss. The thickness of the welding part is a thickness of the welding part in the axial direction. The thickness of the side that is of the welding part and that is close to the boss is reduced, so that a welding buffer may be formed in an area in which the thickness of the welding part is reduced, that is, the side that is of the welding part and that is close to the boss. In this way, the welding stress can be effectively alleviated, the welding yield rate can be improved, and the sealing performance of the second sealing layer for the electrolyte filling port can be ensured.

According to a second aspect, an implementation of this application provides a battery. The battery includes an electrochemical cell, a housing, and the battery cover according to any one of the foregoing items, and the battery cover and the housing are connected to form an accommodation space for accommodating the electrochemical cell and an electrolyte. The housing is provided with an opening, and the battery cover covers the opening, so that the battery cover and the housing are surrounded to form the accommodation space. The battery cover is provided with the electrolyte filling port to meet an electrolyte injection requirement of the battery. To prevent electrolyte leakage from occurring in the electrolyte filling port subsequently, a sealing structure such as the first sealing structure and the second sealing structure is further disposed on the battery cover, and is configured to seal the electrolyte filling port.

In an implementation, the electrolyte filling port is located on a width center line of the cover body, so that the electrolyte can quickly flow into the bottom of the electrochemical cell, thereby improving efficiency of electrolyte injection. In an implementation, the electrolyte filling port is located in the middle of two electrochemical cells or four electrochemical cells, so that the electrolyte can quickly flow into the bottom of the electrochemical cells, thereby improving the efficiency of the electrolyte injection. In an implementation, the battery is a secondary battery, the battery or a plurality of batteries are used for mobile devices, electric vehicles, hybrid vehicles, electric bicycles, and uninterruptible power supplies. In an implementation, the battery is square or cylindrical, and the battery cover is correspondingly rectangular or circular.

In this application, disposing the convex part can prevent the sealing nail from loosening in the axial direction and enhance the connection stability between the sealing nail and the bone nail, so that the bone nail does not fall off easily from the sealing nail, thereby better playing the sealing function. In addition, disposing the convex part increases the local compression amount of the sealing nail, so that the sealing effect of the first sealing layer is enhanced, thereby playing a good sealing function on the electrolyte filling port. The electrolyte is not easily leaked to the outside of the battery through the electrolyte filling port, thereby effectively improving the reliability of the long-term sealing of the battery and ensuring the normal operation of the battery.

## BRIEF DESCRIPTION OF DRAWINGS

To describe technical solutions in embodiments of this application more clearly, the following describes the accompanying drawings used in embodiments of this application.

FIG. 1 is a schematic diagram of a structure of a battery according to an implementation of this application;
FIG. 2 is a cross-sectional view of a structure of a battery cover according to an implementation of this application;
FIG. 3 is a partial enlarged view of a part M in FIG. 2;
FIG. 4 is a cross-sectional view of a partial structure of a battery cover according to an implementation of this application;
FIG. 5 is a schematic diagram of a structure of a bone nail according to an implementation of this application;
FIG. 6 is a schematic diagram of a structure of a bone nail according to an implementation of this application;
FIG. 7 is a schematic diagram of a structure of a bone nail according to an implementation of this application;
FIG. 8a is a schematic diagram of a structure of a first sealing structure before compression according to an implementation of this application;
FIG. 8b is a schematic diagram of a structure of a first sealing structure after compression according to an implementation of this application;
FIG. 9 is a schematic diagram of a structure of a first sealing structure according to an implementation of this application;
FIG. 10 is a cross-sectional view of a structure of a battery cover according to an implementation of this application;
FIG. 11 is a partial enlarged view of a part N in FIG. 10; and
FIG. 12 is a cross-sectional view of a partial structure of a battery cover according to an implementation of this application.

## DESCRIPTION OF EMBODIMENTS

The following describes the technical solutions in embodiments of this application with reference to the accompanying drawings in embodiments of this application. It is clearly that the described embodiments are merely some rather than all of embodiments of this application.

The terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of this application, unless otherwise stated, "a plurality of" means two or more than two.

In addition, in this specification, position terms such as "top" and "bottom" are defined relative to positions of structures in the accompanying drawings. It should be understood that these position terms are relative concepts used for relative description and clarification, and may correspondingly change according to changes in the positions of the structures.

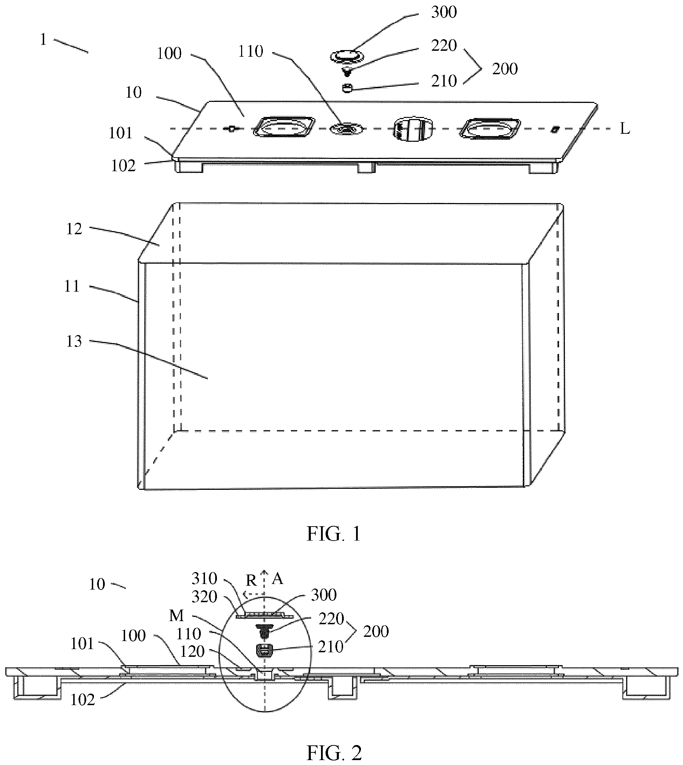

With reference to FIG. 1, an implementation of this application provides a battery 1. The battery 1 includes an electrochemical cell (not shown in the figure), a housing 11, and a battery cover 10. The battery cover 10 and the housing 11 are connected to form an accommodation space 13 for accommodating the electrochemical cell and an electrolyte. The housing 11 is provided with an opening 12, and the battery cover 10 covers the opening 12, so that the battery cover 10 and the housing 11 are surrounded to form the accommodation space 13. The battery cover 10 is provided with an electrolyte filling port 110 to meet an electrolyte injection requirement of the battery 1. To prevent electrolyte leakage from occurring in the electrolyte filling port 110 subsequently, a sealing structure such as a first sealing structure 200 and a second sealing structure 300 is further disposed on the battery cover 10, and is configured to seal the electrolyte filling port 110.

In an implementation, the electrolyte filling port 110 is located on a width center line L of the cover body 100, so that the electrolyte can quickly flow into the bottom of the electrochemical cell, thereby improving efficiency of electrolyte injection. In an implementation, the electrolyte filling port 110 is located in the middle of two electrochemical cells or four electrochemical cells, so that the electrolyte can quickly flow into the bottom of the electrochemical cells, thereby improving efficiency of electrolyte injection. In an implementation, the battery 1 is a secondary battery, and can be repeatedly charged and discharged for a plurality of times. The battery 1 or a plurality of batteries 1 are used for mobile devices, electric vehicles, hybrid vehicles, electric bicycles, and uninterruptible power supplies. In an implementation, the battery 1 is square or cylindrical, and the battery cover 10 is correspondingly rectangular or circular.

The following describes in detail the battery cover 10 in this application.

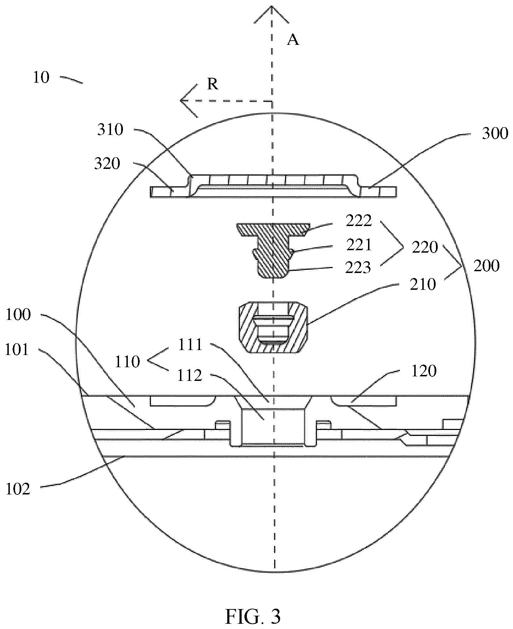

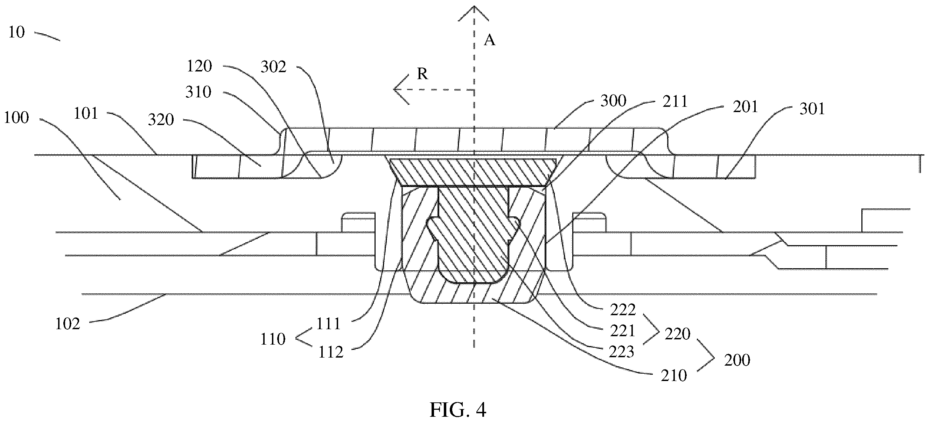

FIG. 2 is a schematic diagram of a structure of a battery cover according to this application. FIG. 3 is a partial enlarged view of a part M in FIG. 2. An implementation of this application provides a battery cover 10. The battery cover 10 is applied to a battery 1, and the battery cover 10 includes a cover body 100 and a first sealing structure 200. The cover body 100 is provided with an electrolyte filling port 110 that runs through the cover body 100, and an electrolyte is injected into the battery 1 through the electrolyte filling port 110. The first sealing structure 200 includes a sealing nail 210 and a bone nail 220 (as shown in FIG. 3). The sealing nail 210 is sleeved on at least a part of the bone nail 220. The sealing nail 210 and the bone nail 220 are inserted into the electrolyte filling port 110, and the sealing nail 210 and the electrolyte filling port 110 form a first sealing layer 201 (as shown in FIG. 4) through interference fitting, to seal the electrolyte filling port 110. An outer peripheral wall of the bone nail 220 is provided with a convex part 221, and a part of the sealing nail 210 is located between the convex part 221 and an inner wall of the electrolyte filling port 110 in a radial direction R of the electrolyte filling port 110.

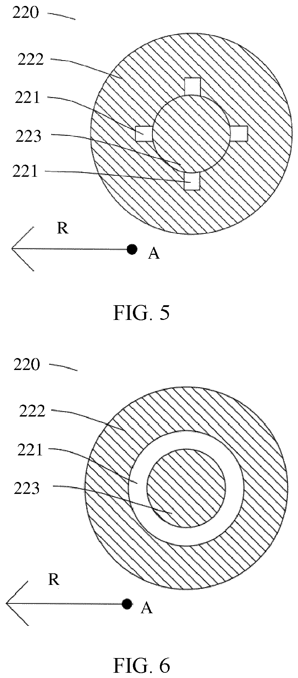

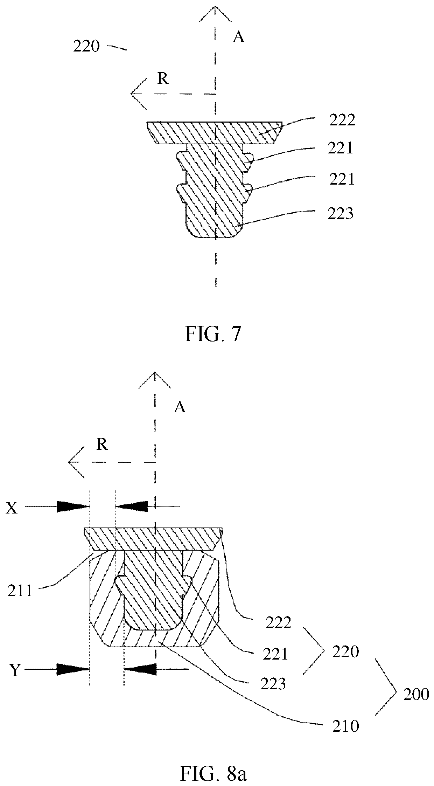

The cover body 100 includes an outer surface 101 and an inner surface 102. The outer surface 101 is located on an outer side of the accommodation space 13, and the inner surface 102 is disposed close to the accommodation space 13 compared with the outer surface 101. The electrolyte filling port 110 runs through the outer surface 101 and the inner surface 102 of the cover body 100. An axial direction A of the electrolyte filling port 110 is perpendicular to the outer surface 101 and the inner surface 102 of the cover body 100. The radial direction R of the electrolyte filling port 110 is parallel to the outer surface 101 and the inner surface 102. The convex part 221 is located on the outer peripheral wall of the bone nail 220 and protrudes towards the electrolyte filling port 110 along the radial direction R. The sealing nail 210 is sleeved on the convex part 221 and a part of the bone nail 220, and a projection of the convex part 221 on the electrolyte filling port 110 along the radial direction R is located on the inner wall of the electrolyte filling port 110. In an implementation, a plurality of convex parts 221 are disposed at intervals around a periphery of the bone nail 220 (as shown in FIG. 5). In an implementation, the convex part 221 is disposed on a circle of the outer peripheral wall of the bone nail 220 (as shown in FIG. 6). In an implementation, the bone nail 220 is provided with a plurality of convex parts 221 along the axial direction A (as shown in FIG. 7), to prevent the bone nail 220 and the sealing nail 210 from loosening in the axial direction A, and ensure stable combination of the bone nail 220 and the sealing nail 210.

The sealing nail 210 is elastic and can be compressed. Before the sealing nail 210 is inserted into the electrolyte filling port 110, an outer diameter of the sealing nail 210 along the radial direction R is greater than an inner diameter of the electrolyte filling port 110. After the sealing nail 210 is inserted into the electrolyte filling port, the sealing nail 210 is compressed, and the sealing nail 210 is closely attached to the inner wall of the electrolyte filling port 110, to form the first sealing layer 201, to prevent electrolyte leakage. In an implementation, a material of the sealing nail 210 is rubber. In an implementation, the material of the sealing nail 210 is polystyrene sulfide, polyethylene terephthalate plastic, or polypropylene. In an implementation, the material of the sealing nail 210 is a corrosion-resistant material.

Hardness of the bone nail 220 is greater than hardness of the sealing nail 210, and the bone nail 220 is not easily compressed. In an implementation, after the first sealing structure 200 is inserted into the electrolyte filling port 110, a compression degree of the bone nail 220 is less than a compression degree of the sealing nail 210. In an implementation, after the first sealing structure 200 is inserted into the electrolyte filling port 110, the bone nail 220 is not compressed. In an implementation, a material of the bone nail 220 is plastic, metal, or ceramic.

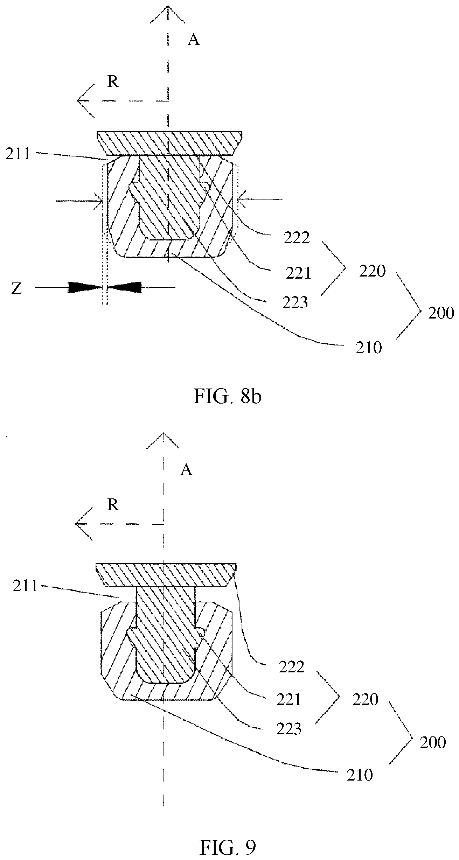

In a possible implementation, a compression amount of the part of the sealing nail 210 between the convex part 221 and the inner wall of the electrolyte filling port 110 is a first compression amount $C_1$, a compression amount of a part of the sealing nail 210 between a part that is of the bone nail 220 and that is other than a part provided with the convex part 221 and the inner wall of the electrolyte filling port 110 is a second compression amount $C_2$, and the first compression amount $C_1$ is greater than the second compression amount $C_2$. In this implementation, the compression amount refers to a ratio of a thickness of the sealing nail 210 compressed along the radial direction R to an original thickness. FIG. 8a shows a first sealing structure 200 before compression, and FIG. 8b shows a first sealing structure 200 after compression.

A calculation formula of the first compression amount $C_1$ is:

$$C_1 = \frac{Z}{X} * 100\%$$

A calculation formula of the second compression amount $C_2$ is:

$$C_2 = \frac{Z}{Y} * 100\%$$

Before the sealing nail 210 is compressed, along the radial direction R, a thickness of a part that is of the sealing nail 210 and that is in contact with the convex part 221 is a first thickness X (as shown in FIG. 8a), and a thickness of a part that is of the sealing nail 210 and that is in contact with a part of the bone nail 220 other than the convex part 221 is a second thickness Y. Because the convex part 221 is disposed, the first thickness X is less than the second thickness Y. After the sealing nail 210 is compressed, along the radial direction R, a compressed thickness of the sealing nail 210 that is in contact with the inner wall of the electrolyte filling port 110 is Z. Because the first thickness X is less than the second thickness Y, the first compression amount $C_1$ is greater than the second compression amount $C_2$. In the radial direction R, a local compression amount of the part of the sealing nail 210 between the convex part 221 and the inner wall of the electrolyte filling port 110 increases, and the sealing nail 210 is more closely in contact with the inner wall of the electrolyte filling port 110, thereby enhancing sealing effect of the sealing nail 210 on the electrolyte filling port 110. In an implementation, the first compression amount $C_1$ is 15%. In an implementation, the first compression amount $C_1$ is greater than 15%. In an implementation, the second compression amount $C_2$ is greater than or equal to 8% and less than 10%. In an implementation, the second compression amount $C_2$ is greater than or equal to 10% and less than 15%.

Disposing the convex part 221 prevents the sealing nail 210 from loosening in the axial direction A and enhances connection stability between the sealing nail 210 and the bone nail 220, so that the bone nail 220 does not fall off easily from the sealing nail 210, thereby better playing a sealing function. In addition, disposing the convex part 221 increases a local compression amount of the sealing nail 210, so that sealing effect of the first sealing layer 201 is enhanced. The first sealing structure 200 plays a good sealing function on the electrolyte filling port 110, and the electrolyte is not easily leaked to the outside of the battery 1 through the electrolyte filling port 110, thereby effectively improving reliability of long-term sealing of the battery 1, enhancing reliability of the battery 1, and ensuring normal operation of the battery 1.

In a possible implementation, the convex part 221 and the bone nail 220 are of an integrated structure. The integrated structure has higher strength, and the convex part 221 and the bone nail 220 are not easily separated. In an implementation, the convex part 221 is fastened to the bone nail 220 by welding.

In a possible implementation, the electrolyte filling port 110 includes a first port 111 and a second port 112 that are connected (as shown in FIG. 3). The first port 111 is disposed close to the outer surface 101 of the battery cover 10 compared with the second port 112, and a minimum inner diameter of the first port 111 is greater than or equal to an inner diameter of the second port 112. The bone nail 220 includes a nail rod 223 and a nail head 222 that are connected, the nail head 222 is clamped to an inner wall of the first port 111, the nail rod 223 is located in the second port 112, and the sealing nail 210 is sleeved at an end that is of the nail rod 223 and that is away from the nail head 222. The convex part 221 is located between the nail rod 223 and an inner wall of the second port 112 in the radial direction R of the electrolyte filling port 110 (as shown in FIG. 4).

A minimum inner diameter of the first port 111 is greater than an inner diameter of the second port 112, and a diameter of the nail head 222 in the radial direction R is greater than a diameter of the nail rod 223 and the inner diameter of the second port 112, so that the nail head 222 is clamped to the inner wall of the first port 111. In an implementation, the nail head 222 and the inner wall of the first port 111 are welded and fastened. The nail head 222 and the first port 111 are disposed, so that the nail head 222 is clamped to the inner wall of the first port 111, and movement of the bone nail 220 along the axial direction A towards the accommodation space 13 is limited, to prevent the bone nail 220 from falling into the accommodation space 13, and ensure the sealing function of the first sealing structure 200 on the electrolyte filling port 110 and normal operation of the battery 1.

With reference to FIG. 4, in a possible implementation, the first port 111 is a tapered port, the second port 112 is a columnar port, and inner diameters of the first port 111 and the second port 112 are equal at a joint. In the axial direction A, from an end close to the accommodation space 13 to an end away from the accommodation space 13, an inner diameter of the first port 111 gradually increases, and an outer diameter of the nail head 222 matches the inner diameter of the first port 111, so that the nail head 222 is better clamped to the first port 111.

In a possible implementation, a gap 211 (as shown in FIG. 4) is provided between the sealing nail 210 and the nail head 222. When the sealing nail 210 is inserted into the electrolyte filling port 110, the sealing nail 210 deforms, and a part of the sealing nail 210 moves away from the accommodation space 13 along the axial direction A. The gap 211 is disposed, so that space is reserved for the sealing nail 210 at an end that is away from the accommodation space 13 along the axial direction A to deform. The bone nail 220 does not shift due to deformation of the sealing nail 210, the connection stability between the sealing nail 210 and the bone nail 220 is enhanced, and the bone nail 220 does not fall off easily from the sealing nail 210, thereby better playing a sealing function. In addition, the sealing nail 210 may be prevented from squeezing the nail head 222 upward because the sealing nail 210 is compressed in the electrolyte filling port 110, thereby affecting structural strength of the nail head 222 and the nail rod 223. In an implementation, the nail rod 223 is wrapped by the sealing nail 210 (as shown in FIG. 4 and FIG. 8a), and the gap 211 is formed by reducing a thickness that is along the radial direction R and that is of an end of the sealing nail 210 close to the nail head 222. In an implementation, the sealing nail 210 is sleeved on a part of the nail rod 223, and an end of the nail rod 223 that is close to the nail head 222 is not wrapped by the sealing nail 210 (as shown in FIG. 9). In this case, a large gap 211 may be formed, and larger deformation space is reserved for the sealing nail 210, thereby enhancing the connection stability between the sealing nail 210 and the bone nail 220.

In a possible implementation, the sealing nail 210 and the bone nail 220 are of an integrated structure, to enhance connection strength between the sealing nail 210 and the bone nail 220. In an implementation, the bone nail 220 may be formed in advance, and then the bone nail 220 is placed in a mold for injection molding the sealing nail 210, and a melt material of the bone nail 220 and the sealing nail 210 is integrally injected and molded, to solidify and form the first sealing structure 200 of the integrated structure.

With reference to FIG. 3 and FIG. 4, in a possible implementation, the battery cover 10 further includes a second sealing structure 300. The second sealing structure 300 is located at an end that is of the bone nail 220 and that is away from the electrolyte. The second sealing structure 300 covers the electrolyte filling port 110 and an edge of the second sealing structure 300 is welded to the outer surface 101 of the cover body 100 to form a second sealing layer 301, to seal the electrolyte filling port 110. An orthographic projection area of the second sealing structure 300 on the cover body 100 is greater than an opening area of the electrolyte filling port 110 on the outer surface 101 of the cover body 100. The orthographic projection of the second sealing structure 300 on the cover body 100 covers the electrolyte filling port 110, and the edge of the second sealing structure 300 is welded to a periphery of the electrolyte filling port 110 on one side of the outer surface 101 of the cover body 100, to form the second sealing layer 301, thereby improving sealing performance of the electrolyte filling port 110. The first sealing structure 200 and the second sealing structure 300 perform double-layer sealing on the electrolyte filling port 110 to improve sealing performance.

In a possible implementation, the second sealing structure 300 includes a boss 310 and a welding part 320 disposed around the boss 310 (as shown in FIG. 3 and FIG. 4). The welding part 320 is welded to the outer surface 101 of the cover body 100 to form the second sealing layer 301. The boss 310 protrudes from the outer surface 101 of the cover body 100 and is located on an outer side of the bone nail 220. The boss 310, the welding part 320, the outer surface 101 of the cover body 100, and the bone nail 220 form an enclosed space 302. The boss 310 protrudes along the axial direction A away from the cover body 100, and the welding part 320 is welded to the outer surface 101 of the cover body 100 at a periphery of the electrolyte filling port 110. The boss 310 covers at least a part of the electrolyte filling port 110. In this implementation, the boss 310 covers the entire electrolyte filling port 110. In this implementation, the boss 310 and the welding part 320 are of an integrated structure.

In an implementation, a sealing status of the electrolyte filling port 110 is checked in a helium detection manner. During helium detection, the battery 1 is usually placed in a vacuum box, and the vacuum box is connected to a helium gas detector. After the vacuum box is vacuumized, helium gas of a specific pressure is filled. In this case, if sealing performance of the battery 1 is poor, the helium gas enters the battery 1. If the sealing performance of the battery 1 is good, the helium gas does not enter the battery 1. Then the helium gas in the vacuum box is discharged, and the helium gas inside the battery 1 is not discharged. The vacuum box continues to be vacuumized, the helium gas detector is started, and the gas extracted is detected. In this case, if the sealing performance of the battery 1 is poor, the helium gas inside the battery 1 is extracted under an external negative pressure, and is detected by the helium gas detector. If the sealing performance of the battery 1 is good, and no helium gas exists inside the battery 1, the helium gas detector cannot detect the helium gas.

The enclosed space 302 is disposed. During helium detection, a helium storage space is provided. When sealing performance of the second sealing layer 301 is poor, the helium gas may enter the enclosed space 302 for storage in a process of inrushing the helium gas. When the helium gas detector detects the helium gas, the helium gas in the enclosed space 302 escapes and is detected by the helium gas detector. The boss 310 protrudes outwards from the outer surface 101 of the cover body 100, so that a volume of the enclosed space 302 is large. The enclosed space 302 with a large volume increases an amount of helium gas that enters the enclosed space 302 when the sealing performance of the second sealing layer 301 is poor, thereby effectively improving identification of helium detection and improving reliability of the helium detection.

The boss 310 is disposed, so that a buffer is formed at a joint between the boss 310 and the welding part 320. In this way, welding stress can be effectively alleviated, a welding yield rate can be improved, and sealing performance of the second sealing layer 301 for the electrolyte filling port 110 can be ensured. In addition, the boss 310 may increase the volume of the enclosed space 302, effectively improve the identification of the helium detection, and improve reliability of a result of sealing performance detection of the electrolyte filling port 110.

In a possible implementation, the outer surface 101 of the cover body 100 is provided with a concave part 120 (as shown in FIG. 4), the concave part 120 is disposed around a periphery of the electrolyte filling port 110, and the edge of the second sealing structure 300 is welded to the concave part 120. The concave part 120 is concave from the outer surface 101 of the cover body 100 to the inner surface 102. In this implementation, the welding part 320 and the outer surface 101 of the cover body 100 are welded to the concave part 120. In an implementation, the welding part 320 is welded to an inner wall of a side that is of the concave part 120 and that is away from the electrolyte filling port 110. The inner wall of the concave part 120 that is close to a side of the electrolyte filling port 110, the boss 310, the welding part 320, the outer surface 101 of the cover body 100, and the nail head 222 jointly form the enclosed space 302.

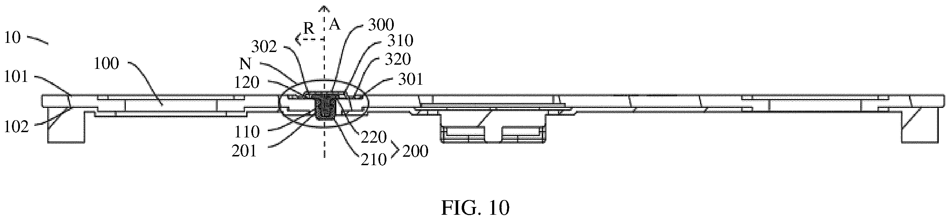

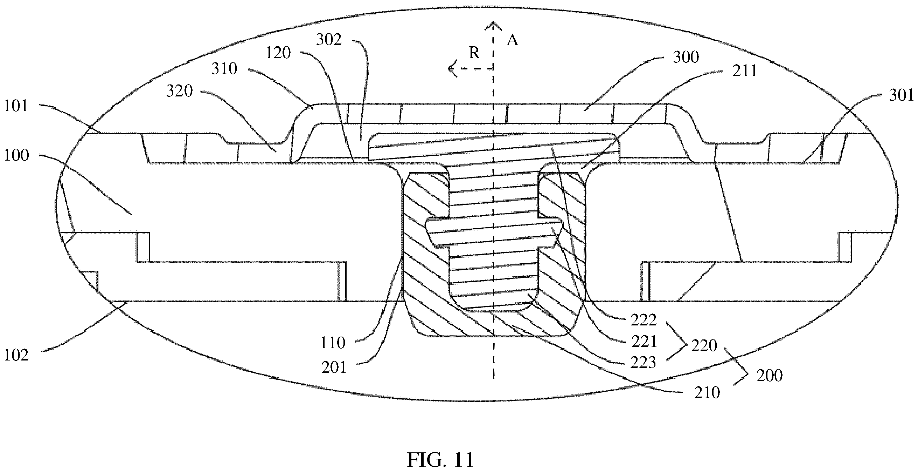

FIG. 10 is a schematic diagram of a structure of a battery cover 10 in another implementation, and FIG. 11 is a partial view of a layout of a part N in FIG. 10. In this implementation, the concave part 120 is connected to the electrolyte filling port 110, the electrolyte filling port 110 is a columnar port, and the nail head 222 is clamped to the concave part 120. The concave part 120 is disposed, so that the second sealing structure 300 is better welded to the outer surface 101 of the cover body 100, and the sealing performance of the second sealing structure 300 for the electrolyte filling port 110 is ensured.

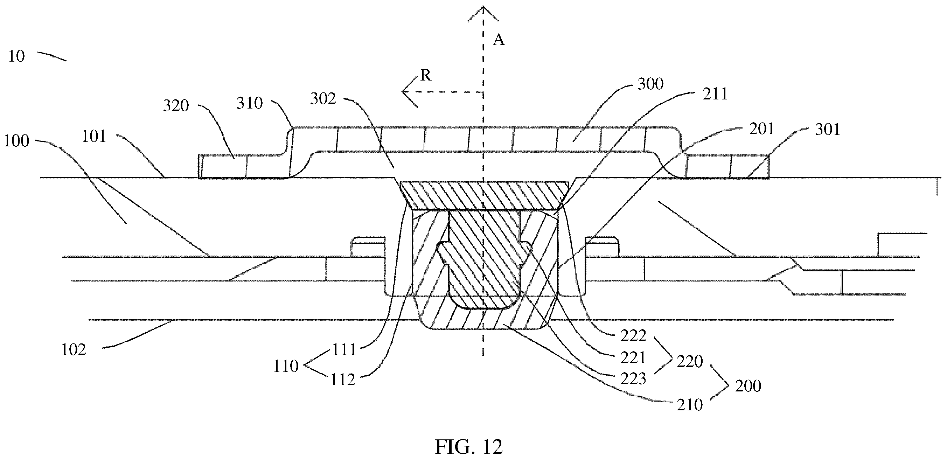

In an implementation, no concave part 120 is disposed on the outer surface 101 of the cover body 100 (as shown in FIG. 12), and the welding part 320 is directly welded to the outer surface 101 of the cover body 100.

Still with reference to FIG. 11, in a possible implementation, a thickness of a side that is of the welding part 320 and that is close to the boss 310 is less than a thickness of a side that is of the welding part 320 and that is away from the boss 310. The thickness of the welding part 320 is a thickness of the welding part 320 in the axial direction A. The thickness of the side that is of the welding part 320 and that is close to the boss 310 is reduced, so that a welding buffer may be formed in an area in which the thickness of the welding part 320 is reduced, that is, the side that is of the welding part 320 and that is close to the boss 310. In this way, the welding stress can be effectively alleviated, the welding yield rate can be improved, and the sealing performance of the second sealing layer 301 for the electrolyte filling port 110 can be ensured.

The battery cover and the battery provided in embodiments of this application are described above in detail. The principle and embodiments of this application are described in this specification through specific examples. The descriptions about embodiments of this application are merely provided to help understand the method and core ideas of this application. In addition, persons of ordinary skill in the art can make variations and modifications to this application in terms of the specific embodiments and application scopes according to the ideas of this application. Therefore, the content of this specification shall not be construed as a limit to this application.

## Claims

1. A battery cover, applied to a battery, wherein the battery cover comprises:

   a cover body, provided with an electrolyte filling port that runs through the cover body, wherein an electrolyte is injected into the battery through the electrolyte filling port; and
   a first sealing structure, comprising a sealing nail and a bone nail, wherein the sealing nail is sleeved on at least a part of the bone nail, the sealing nail and the bone nail are inserted into the electrolyte filling port, and the sealing nail and the electrolyte filling port form a first sealing layer through interference fitting, to seal the electrolyte filling port; and an outer peripheral wall of the bone nail is provided with a convex part, and a part of the sealing nail is located between the convex part and an inner wall of the electrolyte filling port in a radial direction of the electrolyte filling port.

2. The battery cover according to claim 1, wherein in the radial direction of the electrolyte filling port, a compression amount of the part of the sealing nail between the convex part and the inner wall of the electrolyte filling port is a first compression amount, a compression amount of a part of the sealing nail between a part that is of the bone nail and that is other than a part provided with the convex part and the inner wall of the electrolyte filling port is a second compression amount, and the first compression amount is greater than the second compression amount.

3. The battery cover according to claim 1, wherein the convex part and the bone nail are of an integrated structure.

**4.** The battery cover according to claim 1, wherein the electrolyte filling port comprises a first port and a second port that are connected, the first port is disposed close to an outer surface of the battery cover compared with the second port, and a minimum inner diameter of the first port is greater than or equal to an inner diameter of the second port; and the bone nail comprises a nail rod and a nail head that are connected, the nail head is clamped to an inner wall of the first port, the nail rod is located in the second port, the sealing nail is sleeved at an end that is of the nail rod and that is away from the nail head, and the convex part is located between the nail rod and the inner wall of the electrolyte filling port in the radial direction of the electrolyte filling port.

**5.** The battery cover according to claim 4, wherein the first port is a tapered port, the second port is a columnar port, and inner diameters of the first port and the second port are equal at a joint.

**6.** The battery cover according to claim 4, wherein a gap is provided between the sealing nail and the nail head.

**7.** The battery cover according to claim 1, wherein the sealing nail and the bone nail are of an integrated structure.

**8.** The battery cover according to claim 1, wherein the battery cover further comprises a second sealing structure, the second sealing structure is located at an end that is of the bone nail and that is away from the electrolyte, the second sealing structure covers the electrolyte filling port, and an edge of the second sealing structure is welded to an outer surface of the cover body to form a second sealing layer, to seal the electrolyte filling port.

**9.** The battery cover according to claim 8, wherein the second sealing structure comprises a boss and a welding part disposed around the boss, the welding part is welded to the outer surface of the cover body to form the second sealing layer, the boss protrudes from the outer surface of the cover body and is located on an outer side of the bone nail, and the boss, the welding part, the outer surface of the cover body, and the bone nail form an enclosed space.

**10.** The battery cover according to claim 8, wherein the outer surface of the cover body is provided with a concave part, the concave part is disposed around a periphery of the electrolyte filling port, and the edge of the second sealing structure is welded to the concave part.

**11.** The battery cover according to claim 9, wherein a thickness of a side that is of the welding part and that is close to the boss is less than a thickness of a side that is of the welding part and that is away from the boss.

**12.** A battery, wherein the battery comprises an electrochemical cell, a housing, and the battery cover according to any one of claims 1 to 11, and the battery cover and the housing are connected to form an accommodation space for accommodating the electrochemical cell and an electrolyte.

FIG. 1

FIG. 2

FIG. 3

FIG. 4

EP 4 386 943 A1

220

222

221

223

221

R

A

FIG. 5

220

222

221

223

R

A

FIG. 6

220

A

R

222
221
221
223

## FIG. 7

A

R

X

211

Y

222
221
223

220

210

200

## FIG. 8a

FIG. 8b

FIG. 9

EP 4 386 943 A1

FIG. 10

FIG. 11

EP 4 386 943 A1

FIG. 12

EP 4 386 943 A1

## INTERNATIONAL SEARCH REPORT

| | International application No. |
|---|---|
| | **PCT/CN2022/134302** |

**A. CLASSIFICATION OF SUBJECT MATTER**

H01M 50/10(2021.01)i; H01M 50/147(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, CNKI, ENTXT, ENTXTC, DWPI: 电池, 盖板, 注液孔, 密封, 钉, 凸, battery, cell, cover, plate, electrolyte, inject+, hole, seal+, nail, pin, protrud+, convex

**C. DOCUMENTS CONSIDERED TO BE RELEVANT**

| Category* | Citation of document, with indication, where appropriate, of the relevant passages | Relevant to claim No. |
|---|---|---|
| X | CN 212277315 U (BYD CO., LTD.) 01 January 2021 (2021-01-01) description, paragraphs 28-40, and figures 1-5 | 1-12 |
| X | CN 210182478 U (JIANGSU TAFEL NEW ENERGY TECHNOLOGY CO., LTD. et al.) 24 March 2020 (2020-03-24) description, paragraphs 25-43, and figures 1-3 | 1-7, 12 |
| Y | CN 210182478 U (JIANGSU TAFEL NEW ENERGY TECHNOLOGY CO., LTD. et al.) 24 March 2020 (2020-03-24) description, paragraphs 25-43, and figures 1-3 | 8-12 |
| Y | CN 208368558 U (NINGDE CONTEMPORARY AMPEREX TECHNOLOGY CO., LTD.) 11 January 2019 (2019-01-11) description, paragraphs 40-56, and figures 1-6 | 8-12 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 January 2023** | **19 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/134302**

| Patent document cited in search report | | | Publication date (day/month/year) | Patent family member(s) | Publication date (day/month/year) |
|---|---|---|---|---|---|
| CN | 212277315 | U | 01 January 2021 | None | |
| CN | 210182478 | U | 24 March 2020 | None | |
| CN | 208368558 | U | 11 January 2019 | None | |

Form PCT/ISA/210 (patent family annex) (January 2015)

## REFERENCES CITED IN THE DESCRIPTION

### Patent documents cited in the description

- CN 202123300108